# EUROPÄISCHE PATENTSCHRIFT

(11) **EP 3 269 026 B1**
(45) Veröffentlichungstag und Bekanntmachung des Hinweises auf die Patenterteilung: **27.05.2020**
(21) Anmeldenummer: 16708600.8
(22) Anmeldetag: 04.03.2016
(51) Int. Cl.: H02K 15/085, H02K 15/095

(54) **VERFAHREN ZUM WICKELN EINER SPULE**
METHOD FOR WINDING A COIL
PROCÉDÉ DE BOBINAGE D'UNE BOBINE

(30) Priorität: 13.03.2015 DE 102015003307; 17.06.2015 DE 102015007836
(43) Veröffentlichungstag der Anmeldung: 17.01.2018
(73) Patentinhaber: Audi AG, 85045 Ingolstadt (DE)
(72) Erfinder: GRÄF, Rolf, 85055 Ingolstadt (DE); STENZEL, Peer, 85051 Ingolstadt (DE); HILDEBRAND, Carsten, 85049 Ingolstadt (DE); BIER, Alexander, 74078 Heilbronn (DE)
(86) Internationale Anmeldenummer: PCT/EP2016/000388
(87) Internationale Veröffentlichungsnummer: WO 2016/146243

(56) Entgegenhaltungen:
- EP-A1- 0 982 837
- WO-A1-2005/124974
- WO-A2-2009/106273

## Beschreibung

Die Erfindung betrifft ein Verfahren zum Wickeln einer Spule für eine Komponente einer Elektromaschine und eine Wickelvorrichtung.

Eine Elektromaschine umfasst zwei Komponenten, die relativ zueinander beweglich sind, wobei mindestens eine dieser beiden Komponenten Spulen aufweist. Bei einer relativen Bewegung der Komponenten zueinander ist elektrische in mechanische Energie oder mechanische in elektrische Energie umzuwandeln. Drähte zum Bereitstellen der Spulen sind üblicherweise mit einer Wickelmaschine zu wickeln.

Eine Vorrichtung zum automatischen Wickeln von Spulen in Nuten eines Stators einer elektrischen Maschine ist aus der Druckschrift EP 1 990 899 A1 bekannt. Diese Vorrichtung umfasst eine in einer ersten Achsrichtung axial und in einer zweiten Achsrichtung rechtwinklig zur ersten Achsrichtung verschiebbare Wickelstange, eine Wickelnadel, die von einem freien Ende der Wickelstange in einer durch die erste und die zweite Achsrichtung definierten Ebene abragt, und einen Schaltapparat, der zur Ausführung einer Drehbewegung um eine in der ersten Achsrichtung liegenden Drehachse ausgebildet und mit einem zu bewickelnden Stator verbindbar ist. Die Wickelnadel ist an der Wickelstange um eine rechtwinklig zur ersten und zweiten Achsrichtung stehenden dritten Achsrichtung programmgesteuert stufenlos auf jede beliebige Winkelposition innerhalb eines vorgegebenen maximalen Schwenkbereichs schwenkbar angeordnet.

Eine Wickelmaschine für zu bewickelnde Teile, insbesondere Statoren oder Rotoren von Elektromotoren, ist aus der Druckschrift WO 2005/124974 A1 bekannt und umfasst eine Aufnahme mit einer Parallelogrammführung für eine Wickelnadel, die eine Auslassöffnung für einen Draht aufweist, zur wahlweisen Einstellung verschiedener Arbeitspositionen der Wickelnadel. Hierbei ist bei einer Schwenkbewegung der Wickelnadel eine virtuelle Schwenkachse zu realisieren, die mit einer Auslassöffnung übereinstimmt. Außerdem sind zwei Hebelarme einer Parallelogrammführung durch zwei als Schwenkbleche ausgeführte Schwenkelemente verbunden, wodurch eine Änderung einer Arbeitsposition ohne Einfluss auf eine Drahtspannung und einen Drahtverlauf ermöglicht werden soll.

Aus der Druckschrift EP 2 015 427 A2 ist ein Verfahren bekannt, mit dessen Hilfe ein lagengenauer Wicklungsaufbau möglich ist, der jedoch ausschließlich bei konzentrierten Zweischicht-Wicklungen angewendet werden kann. Bei verteilten Wicklungen kann hiermit ein gesamter Nutraum genutzt werden. Allerdings ist hier mit einer innen rotationssymmetrisch ausgebildeten Wickelnadel nicht möglich, eine orthozyklische Wicklung zu erzeugen.

Eine weitere Wickelmaschine mit einer beweglichen Düse zum Bereitstellen eines Drahts ist aus der Druckschrift US 6 098 912 bekannt.

Bei dem vorgestellten Stand der Technik ist jedoch nicht jede Position innerhalb einer Nut hinreichend zugänglich.

Vor diesem Hintergrund werden ein Verfahren gemäß des unabhängigen Anspruchs 1 und eine Wickelvorrichtung gemäß des unabhängigen Anspruchs 12 vorgestellt. Ausgestaltungen des Verfahrens und der Wickelvorrichtung gehen aus den abhängigen Patentansprüchen hervor.

Mit dem Verfahren wird auf mindestens einen Zahn einer Komponente einer Elektromaschine Draht gewickelt, wobei die Komponente einen Grundkörper mit mehreren an dem Grundkörper angeordneten Zähnen aufweist, wobei jeder Zahn einerseits durch den Grundkörper und andererseits durch einen Flansch mit einem Rand begrenzt ist, wobei zwischen zwei unmittelbar benachbarten Zähnen eine Nut angeordnet ist, die einen Nutschlitz als Öffnung aufweist, dessen Rand durch Ränder unmittelbar benachbarter Flansche begrenzt ist. Bei dem Verfahren wird eine Wickelnadel verwendet, an deren Ende eine Drahtförderdüse angeordnet ist. Bei Durchführung des Verfahrens wird die Drahtförderdüse jeweils innerhalb einer Nut neben einem jeweils zu umwickelnden Zahn angeordnet und durch den Nutschlitz dieser Nut geführt. Außerdem wird bzw. werden die Komponente der Elektromaschine und/oder die Wickelnadel über einen Nadelhalter, an dem die Wickelnadel angeordnet ist, bezüglich einer sich ergebenden Drehachse bewegt, wobei die Drehachse im Bereich eines jeweiligen, die Nut begrenzenden Nutschlitzes verläuft, durch den die Wickelnadel jeweils geführt wird bzw. ist.

Demnach verläuft die sich ergebende Drehachse in der Nähe des Nutschlitzes, in Ausgestaltung durch den Nutschlitz oder parallel zu dem Nutschlitz innerhalb oder außerhalb der Nut. Diese Drehachse verläuft in der Regel parallel zu den Rändern der beiden Flansche an den Zähnen, die den Nutschlitz begrenzen. Die Wickelnadel wird bei einer Bewegung in Richtung des jeweils zu umwickelnden Zahns gerichtet und/oder orientiert und somit gedreht, üblicherweise dann, wenn die Drahtförderdüse zwischen dem Flansch und dem Grundkörper angeordnet ist, wobei Draht aus der Drahtförderdüse gefördert wird. Der Nadelhalter mit der Wickelnadel, für den eine Nadelhalterachse definiert ist, werden um die sich ergebende Drehachse herum exzentrisch gedreht, wobei die sich jeweils ergebende Drehachse parallel zu Rändern der unmittelbar benachbarten Flansche durch den Punkt auf der Wickelnadel, der sich aktuell innerhalb des Nutschlitzes befindet, verläuft. Dabei wird Draht auf eine Außenwandung des Zahns gewickelt.

Eine "sich ergebende Drehachse" soll im Rahmen der vorliegenden Offenbarung als diejenige Achse verstanden werden, die sich bei der erfindungsgemäßen Bewegung der Komponente der Elektromaschine und/oder der Wickelnadel als zumindest virtuelle Drehachse für die Komponente der Elektromaschine und/oder der Wickelnadel ergibt, selbst wenn die eigentliche, real durchgeführte Bewegung eine oder mehrere Translationen und/oder eine oder mehrere Rotationen um eine andere Drehachse umfasst. Es soll damit zum Ausdruck gebracht werden, dass die jeweilig real durchgeführte Bewegung der Komponente der Elektromaschine und/oder der Wickelnadel im Ergebnis eine Drehung um die sich ergebende Drehachse umfasst
Eine Position der sich im Rahmen des Verfahrens ergebenden Drehachse hängt von einer Stellung bzw. Position der Wickelnadel relativ zu dem Nutschlitz ab. Die sich ergebende Drehachse ist als virtuelle und/oder physikalische Drehachse ausgebildet. Im Folgenden wird auch von "der Drehachse" gesprochen.

In Ausgestaltung des Verfahrens ist möglich, dass die Komponente sowie der Nadelhalter mit der Wickelnadel bei einer Bewegung bezüglich der sich ergebenden, bspw. virtuellen und/oder physikalischen Drehachse um diese Drehachse herum gedreht werden.

Mit dem Verfahren und der Wickelvorrichtung ist unter Realisierung einer Nadelwickeltechnik eine bessere Positionierung durch eine Schrägstellung der Drahtförderdüse relativ zu dem jeweiligen Zahn zu erreichen, indem u. a. eine Relativbewegung zwischen der Komponente und Nadelhalter ausgeführt wird, die eine Schrägstellung der Wickelnadel gegenüber der Symmetrieebene der Nut erlaubt.

In Ausgestaltung des Verfahrens werden der Nadelhalter und somit die Drahtförderdüse sowie die Komponente in mindestens einer Raumrichtung zueinander üblicherweise translatorisch verschoben, wobei die Komponente bei einer Bewegung bezüglich der Drehachse um ihre Mittelachse zentrisch und/oder üblicherweise ihre Mittelachse um die vorgesehene, sich ergebende Drehachse exzentrisch gedreht wird. Somit wird die Drahtförderdüse relativ zu der Komponente und/oder die Komponente relativ zu der Drahtförderdüse verschoben, wobei eine derartige Verschiebung durch eine Rotation der Komponente überlagert ist.

Somit können die Komponente und der Nadelhalter mit der Wickelnadel in unterschiedlichen Varianten zueinander bewegt werden. Dabei ist es möglich, den Nadelhalter bei einer Bewegung der sich ergebenden Drehachse um diese Drehachse exzentrisch zu drehen. Außerdem ist eine kombinierte und/oder überlagerte zentrische Rotation der Komponente um die Mittelachse und eine translatorische Bewegung der Komponente möglich. Alternativ oder ergänzend ist eine kombinierte und/oder überlagerte zentrische Rotation der Komponente um ihre Mittelachse sowie eine translatorische Verschiebung des Nadelhalters möglich. Weiterhin ist eine zentrische und/oder exzentrische Rotation des Nadelhalters gegenüber der Komponente denkbar.

In möglichen Ausgestaltungen des Verfahrens sind von der Komponente und dem Nadelhalter mit der Wickelnadel unterschiedliche translatorische Verschiebungen und/oder Drehungen zur Durchführung von Bewegungen relativ zueinander und bezüglich bzw. relativ zu der Drehachse durchführbar, wobei derartige Bewegungen miteinander unterschiedlich kombinierbar sind, wodurch die vorgesehenen translatorischen und/oder rotatorischen Bewegungen miteinander überlagert werden.

So ist es möglich, dass bei der Bewegung eine exzentrische Rotation des Nadelhalters um die Drehachse ermöglicht wird. Außerdem ist eine exzentrische Rotation der Komponente um die Drehachse zu ermöglichen. Weiterhin ist eine kombinierte und somit überlagerte zentrische Rotation der Komponente um deren Mittelachse mit mindestens einer translatorischen Bewegung der Komponente möglich. Alternativ oder ergänzend ist eine kombinierte und/oder überlagerte zentrische Rotation der Komponente um deren Mittelachse mit einer translatorischen Bewegung bzw. Verschiebung des Nadelhalters und somit der Wickelnadel denkbar.

In Ausgestaltung wird ein Abstand zwischen der an der Wickelnadel angeordneten Drahtförderdüse und dem jeweiligen Nutschlitz verändert. Somit ist u. a. eine Position der Drahtförderdüse innerhalb der Nut, deren Rand durch den Nutschlitz begrenzt ist, zu variieren, wobei die Drahtförderdüse unterschiedlich tief in die jeweilige Nut eindringt.

Das Verfahren wird in der Regel für eine rotationssymmetrische Komponente, bspw. einen Stator oder Rotor der Elektromaschine, die die zentrale Mittelachse aufweist, durchgeführt. In diesem Fall wird der Nadelhalter mit der Wickelnadel und der Drahtförderdüse relativ zu der rotationssymmetrischen Komponente bzw. deren Mittelachse in axialer Richtung, radialer Richtung und/oder tangentialer Richtung und somit in mindestens eine Raumrichtung üblicherweise translatorisch verschoben und somit bewegt.

Üblicherweise wird die Komponente bei einer durchzuführenden Bewegung bezüglich der Drehachse zentrisch um ihre Mittelachse gedreht. Alternativ oder ergänzend wird die Komponente hierbei exzentrisch um die vorgesehene Drehachse gedreht.

Demnach wird die üblicherweise direkt durch den Nutschlitz verlaufende und somit sich ergebende Drehachse durch eine überlagerte rotatorische, in der Regel zentrische und translatorische Bewegung der Komponente realisiert. Weiterhin kann die direkt durch den Nutschlitz verlaufende virtuelle und/oder physikalische Drehachse durch eine überlagerte rotatorische, in der Regel zentrische Bewegung der Komponente und einer translatorischen Bewegung des Nadelhalters realisiert werden. Weiterhin kann die durch den Nutschlitz verlaufende Drehachse durch exzentrische Drehung der Mittelachse der Komponente realisiert werden. Alternativ oder ergänzend kann die durch den Nutschlitz verlaufende Drehachse durch die zusätzliche exzentrische Drehung des Nadelhalters realisiert werden.

Üblicherweise wird bzw. werden die Komponente und/oder die Wickelnadel bezüglich oder relativ zu der sich ergebenden Drehachse bewegt, wobei in einer Variante entweder nur die Komponente oder die Wickelnadel relativ zu der Drehachse bewegt wird. In einer weiteren Variante werden die Komponenten und die Wickelnadel relativ zu der Drehachse und relativ zueinander bewegt. Eine Bewegung der Komponente relativ zu der Drehachse umfasst eine zentrische Rotation um die Mittelachse der Komponente und/oder eine exzentrische Rotation um die Drehachse bzw. Drehung sowie auch eine translatorische Bewegung bzw. Verschiebung relativ zu der Drehachse. Eine Bewegung der Wickelnadel relativ zu der Drehachse umfasst eine Drehung und eine translatorische Bewegung relativ zu der Drehachse. Weiterhin umfasst die Bewegung der Wickelnadel auch eine Verschiebung in axialer, radialer und/oder tangentialer Richtung zu der Komponente.

Im Rahmen des Verfahrens ist es möglich, eine konzentrierte Wicklung oder eine verteilte Wicklung bereitzustellen. Sofern eine konzentrierte Wicklung bereitgestellt wird, wird jeder mit Draht zu umwickelnde Zahn so oft wie erforderlich mit Draht umwickelt. Sofern eine verteilte Wickelung bereitzustellen ist, werden mehrere Zähne zahnübergreifend umwickelt, wobei zwischen zwei Nuten, durch die die Drahtförderdüse nacheinander zu führen ist, mehrere Zähne angeordnet sein können. Unabhängig davon, ob eine auf jeweils einen Zahn konzentrierte Wicklung oder eine auf mehrere Zähne verteilte Wicklung bereitgestellt wird, werden für jeweils einen Zahn die voranstehend beschriebenen Bewegungen der Wickelnadel bzw. Drahtförderdüse sowie der Komponente, wobei diese jeweils um einen jeweiligen Nutschlitz gedreht wird, durchgeführt.

Falls die verteilte Wicklung bereitzustellen ist, wird die Wickelnadel nacheinander nur durch jede k-te Nut einer Vielzahl Nuten zwischen den mehreren Zähnen geführt. Dabei wird die Drahtförderdüse durch eine Nut geführt, danach wird die Drahtförderdüse entlang von k Zähnen geführt, wobei die Drahtförderdüse k-1 Nuten überspringt und erst wieder durch die k-te Nut geführt wird. Bei einem derartigen sich wiederholenden Ablauf wird aus der Drahtförderdüse Draht gefördert und lediglich in jeder k-ten Nut verlegt. Außerdem wird Draht entlang der Zähne zwischen den beiden jeweiligen Nuten verlegt, wobei zwischen zwei Nuten, durch die die Wickelnadel nacheinander geführt wird, k-1 Nuten angeordnet sind. Wenn die Drahtförderdüse durch eine jeweilige Nut geführt wird, wird die Wickelnadel in Richtung einer Außenwandung eines Zahns, der diese Nut begrenzt, ausgerichtet bzw. orientiert.

Um im Rahmen der Ausführungsform des Verfahrens die verteilte Wicklung bereitzustellen, wird die am Ende der Wickelnadel angeordnete Drahtförderdüse entlang einer Bahn relativ zu den Zähnen bzw. Nuten der Komponente bewegt. Bei einer durchzuführenden Ausführungsform ist bspw. vorgesehen, dass bei zumindest einem ersten Schritt des Verfahrens Draht lediglich in jeder dritten Nut zu verlegen ist, so dass k = 3 gilt. Zur Bereitstellung der verteilten Wicklung werden die beiden Nuten, die bspw. zwischen einer dritten und sechsten Nut liegen, übersprungen. Üblicherweise umfasst die Komponente, bspw. der Stator, sofern sie für eine dreiphasige Elektromaschine vorgesehen ist, eine durch drei oder durch sechs teilbare Anzahl an Nuten bzw. Zähnen, in der Regel zumindest sechs Nuten.

In einer möglichen Ausgestaltung ist vorgesehen, dass die rotationssymmetrische Komponente eine Anzahl von bspw. achtzehn Zähnen, nämlich einen ersten, zweiten, dritten, vierten, fünften, sechsten, siebten, achten, neunten, zehnten, elften, zwölften, dreizehnten, vierzehnten, fünfzehnten, sechzehnten, siebzehnten und achtzehnten Zahn und somit auch achtzehn Nuten aufweist. Die insgesamt achtzehn Zähne dieser rotationssymmetrischen Komponente sind entlang von Winkeln zwischen 0° bis 360° am runden Grundkörper dieser Komponente angeordnet. Sofern der erste Zahn bspw. bei 0° angeordnet ist, ist ein neunzehnter Zahn, der wiederum dem ersten Zahn entspricht, bei 360° angeordnet, wobei sich zwischen dem ersten sowie dem neunzehnten Zahn weitere siebzehn Zähne befinden. Zwei unmittelbar benachbarte Zähne sind durch eine dazwischen befindliche Nut voneinander getrennt. Dabei ist eine erste Nut zwischen dem ersten und zweiten Zahn, eine zweite Nut zwischen dem zweiten und dritten Zahn usw. angeordnet.

Im Detail wird bei dieser möglichen Ausgestaltung die Wickelnadel mit der Drahtförderdüse zuerst entlang des ersten Zahns und dann durch die erste Nut geführt, wobei die Wickelnadel hier in Richtung des ersten Zahns orientiert wird. Danach wird die Drahtförderdüse entlang des zweiten bis vierten Zahns geführt. Dann wird die Drahtförderdüse durch eine vierte Nut geführt, wobei die Wickelnadel in Richtung des vierten Zahns orientiert wird. Danach wird die Drahtförderdüse durch jede weitere dritte Nut geführt, wobei jeweils zwei dazwischenliegende Nuten übersprungen werden.

Bei dem Verfahren ist weiterhin vorgesehen, dass auf der Wickelnadel ein Befestigungspunkt angeordnet ist, an dem die Wickelnadel an dem Nadelhalter mit einer Nadelhalterachse befestigt ist, über den die Wickelnadel in drei Raumrichtungen, üblicherweise translatorisch und rotatorisch, relativ zu der Komponente bewegt wird. Dabei bewegt sich der Nadelhalter mit der Drahtförderdüse in bis zu drei Raumrichtungen radial, axial und/oder tangential relativ zu der Komponente.

In Ausgestaltung wird ein Abstand zwischen der Drahtförderdüse und dem jeweiligen Nutschlitz bzw. der Drehachse verändert, wobei die Drahtförderdüse in die Nut unterschiedlich tief eintaucht. Dabei wird die Drahtförderdüse innerhalb der Nut an unterschiedlichen Positionen angeordnet, wobei u. a. eine Position der Drahtförderdüse innerhalb der Nut entlang des Zahns variiert wird. Somit ist auf einer gesamten Länge des Zahns auf diesen Zahn Draht zu wickeln. Außerdem sind auf den Zahn in Ausgestaltung mehrere Schichten Draht übereinander zu wickeln.

Eine Bewegung der Drahtförderdüse um einen Zahn herum resultiert aus einer Überlagerung einer ersten relativen Bewegung, üblicherweise einer radialen Bewegung, und einer zweiten relativen Bewegung, üblicherweise einer tangentialen Bewegung, die der Nadelhalter und somit die Wickelnadel bzw. die Drahtförderdüse relativ zu der Komponente ausführt. Diese beiden relativen Bewegungen der Drahtförderdüse werden jeweils einander abwechselnd durchgeführt.

Zur Bereitstellung der konzentrierten Wicklung auf einen Zahn wird die Drahtförderdüse einerseits zwischen zwei Endpunkten, die außerhalb einer jeweiligen Nut liegen, durch die jeweilige Nut zwischen zwei unmittelbar benachbarten Zähnen hindurch bewegt, wodurch die Drahtförderdüse eine erste relative Bewegung axial zu der Komponente ausführt. Andererseits wird die Drahtförderdüse, wenn sie an einem der beiden Endpunkte angeordnet ist, senkrecht zu einer Richtung der ersten relativen Bewegung um eine Strecke, die größer als eine Breite des Zahns ist, zwischen zwei weiteren Endpunkten parallel zwischen zwei unmittelbar benachbarten Nuten bewegt, wobei von der Drahtförderdüse die zweite relative Bewegung üblicherweise tangential durchgeführt wird. Im Rahmen des Verfahrens wird die Wickelnadel durch einen Nutschlitz geführt, der durch unmittelbar benachbarte Flansche begrenzt ist. Bei der axialen Bewegung der Wickelnadel ist die Drahtförderdüse innerhalb einer Nut angeordnet. Erfindungsgemäß ist bzw. sind die Komponente und/oder die Wickelnadel um den Nutschlitz gedreht, wenn die Wickelnadel durch diesen geführt ist, wodurch die Wickelnadel in Richtung des zu umwickelnden Zahns orientiert wird.

In Ausgestaltung wird der Draht durch Nuten und/oder um Zähne gewickelt, die auf einer gebogenen Wandung einer rotationssymmetrischen Komponente der Elektromaschine angeordnet sind. Dabei sind die Zähne entweder auf einer konkav gekrümmten Innenwandung oder einer konvex gekrümmten Außenwandung der rotationssymmetrischen Komponente der Elektromaschine angeordnet. Weiterhin wird die Drahtförderdüse relativ zu der rotationssymmetrischen Komponente, üblicherweise relativ zu einem jeweiligen Zahn der Komponente und/oder einer Nut, in axialer Richtung, radialer Richtung und tangentialer Richtung relativ zu der Komponente bzw. deren Mittelachse bewegt. In diesem Fall wird eine axiale Bewegung der Drahtförderdüse relativ zu dem jeweiligen Zahn der Komponente innerhalb der zwei unmittelbar benachbarten Nuten, zwischen denen der Zahn angeordnet ist, unter Durchführung der ersten relativen Bewegung bewegt. Eine tangentiale Bewegung der Drahtförderdüse relativ zu der Komponente wird als zweite relative Bewegung durchgeführt. Eine radiale Bewegung der Drahtförderdüse relativ zu der Komponente wird entlang einer Achse des zu umwickelnden Zahns durchgeführt.

Außerdem sind in möglicher Ausgestaltung noch weitere Bewegungen durchführbar. So ist der Nadelhalter um die Nadelhalterachse als Rotationsachse herum zentrisch oder um die Drehachse exzentrisch zu drehen. Alternativ oder ergänzend ist die Wickelnadel senkrecht zu der Nadelhalterachse zu drehen und somit bspw. unter einem Winkel zwischen 0° und 90° zu der Nadelhalterachse anzuwinkeln bzw. schräg zu auszurichten.

Die erfindungsgemäße Wickelvorrichtung ist zum Wickeln von Draht auf mindestens einen Zahn einer Komponente einer Elektromaschine ausgebildet, wobei die Komponente einen Grundkörper mit mehreren an dem Grundkörper angeordneten Zähnen aufweist, wobei jeder Zahn einerseits durch den Grundkörper und andererseits durch einen Flansch mit einem Rand begrenzt ist, wobei zwischen zwei unmittelbar benachbarten Zähnen eine Nut angeordnet ist, die einen Nutschlitz als Öffnung aufweist, dessen Rand durch Ränder unmittelbar benachbarter Flansche begrenzt ist. Die Wickelvorrichtung umfasst eine Wickelnadel, an deren Ende eine Drahtförderdüse angeordnet ist, und eine Positioniereinheit, an der die Komponente anzuordnen ist. Dabei ist die Drahtförderdüse innerhalb einer Nut neben einem jeweils zu umwickelnden Zahn anzuordnen und die Wickelnadel durch einen Nutschlitz dieser Nut zu führen, wobei die Komponente der Elektromaschine mit der Positioniereinheit, die eine rotatorische Bewegung ausführt, und ein die Wickelnadel haltender Nadelhalter relativ zueinander bzgl. einer sich ergebenden Drehachse zu bewegen sind. Diese sich ergebende, bspw. virtuelle Drehachse ist im Bereich des Nutschlitzes parallel zu dem Nutschlitz anzuordnen.

Dabei kann die Drehachse in der Nähe des Nutschlitzes innerhalb oder außerhalb der Nut verlaufen. In Ausgestaltung verläuft die Drehachse durch einen jeweiligen Nutschlitz parallel zu dessen Rand, durch den die Wickelnadel jeweils gerade bzw. augenblicklich geführt ist bzw. wird. Außerdem ist die Wickelnadel in der Regel in Richtung des jeweils zu umwickelnden Zahns zu richten bzw. zu orientieren, wenn die Drahtförderdüse zwischen dem Flansch und dem Grundkörper angeordnet ist bzw. bevor die Drahtförderdüse zwischen dem Flansch und dem Grundkörper angeordnet wird, wobei Draht aus der Drahtförderdüse zu fördern und auf eine Seitenwandung eines jeweiligen Zahns zu wickeln ist. Alternativ kann die Wickelnadel auch in Richtung eines Nutgrunds der Nut orientiert werden.

Bei Durchführung des voranstehend beschriebenen Verfahrens mit der Wickeleinrichtung ist es möglich, die Drahtförderdüse innerhalb einer jeweiligen Nut an jeder beliebigen Position anzuordnen und auf der Außenwandung eines jeweiligen Zahns Draht abzulegen und diesen Zahn mit Draht zu umwickeln. Eine Ausrichtung bzw. Orientierung der Wickelnadel hin zu einem jeweiligen Zahn ist u. a. durch üblicherweise exzentrisches Drehen der Komponente um die im Bereich des Nutschlitzes, bspw. durch den Nutschlitz verlaufende Drehachse und ggf. durch zentrisches Drehen der Komponente um ihre Mittelachse zu erreichen. Alternativ oder ergänzend ist es möglich, die Positioniereinheit linear gegenüber der Wickelnadel zu verschieben und anschließend die Komponente exzentrisch um eine Drehachse im Bereich des Nutschlitzes zu drehen. Alternativ oder ergänzend ist es möglich, den Nadelhalter um die parallel zu dem Nutschlitz verlaufende Drehachse, die in Ausgestaltung durch den Nutschlitz verläuft, zu drehen. Dabei sind mit der Drahtförderdüse auch ansonsten unzugängliche Positionen zu erreichen, die sich innerhalb der Nut zwischen dem Flansch und dem Grundkörper der Komponente befinden.

Mit der Wickelvorrichtung ist das voranstehend beschriebene Verfahren durchzuführen.

Als weitere Einheit weist die Wickelvorrichtung die Positioniereinheit zum Aufnehmen und/oder Befestigen der Komponente an bzw. in der Wickelvorrichtung auf, wobei durch Bewegen der Drahtförderdüse, der Wickelnadel sowie des Nadelhalters relativ zu der Positioniereinheit die voranstehend beschriebenen, überlagerten Bewegungen der Drahtförderdüse relativ zu dem Zahn durchzuführen sind. Erfindungsgemäß ist die mit der Positioniereinheit aufgenommene und/oder daran befestigte Komponente der Elektromaschine mit der Positioniereinheit zu bewegen, in der Regel um eine jeweilige Drehachse im Bereich eines jeweiligen Nutschlitzes zu drehen, wobei die Komponente exzentrisch um die jeweilige Drehachse, bspw. um den jeweiligen Nutschlitz gedreht wird. Alternativ oder ergänzend wird die Komponente mit der Positioniereinheit zentrisch um ihre Mittelachse gedreht.

Alternativ oder ergänzend ist es möglich, die Positioniereinheit bei der Bewegung linear gegenüber der Wickelnadel zu verschieben und anschließend die Komponente exzentrisch um die sich ergebende Drehachse im Bereich des Nutschlitzes zu drehen.

Außerdem weist die Wickelvorrichtung ein Kontrollgerät auf, das dazu ausgebildet ist, einen Ablauf einer relativen Bewegung zwischen der Drahtförderdüse und dem jeweiligen Zahn der Komponente und somit zwischen dem Nadelhalter und der Positioniereinheit zu kontrollieren und somit üblicherweise softwaregestützt zu steuern und/oder zu regeln. Dabei ist das beschriebene Verfahren mit dem Kontrollgerät zu kontrollieren. Dabei wird die Drahtförderdüse entlang einer Bahn um den jeweiligen Zahn geführt und die Drahtförderdüse am Ende der Wickelnadel, wie voranstehend beschrieben, in Richtung des Zahns orientiert.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung einen Aufbau eines Beispiels einer Elektromaschine, die Zähne aufweist, auf die bei einer Ausführungsform des erfindungsgemäßen Verfahrens Draht gewickelt ist.
Figur 2 zeigt in schematischer Draufsicht Beispiele von relativen Bewegungen, die im Rahmen einer Ausführungsform des erfindungsgemäßen Verfahrens bei einem Nadelwickelprozess zum Bereitstellen einer konzentrierten Spule bzw. Wicklung für die Drehstrom-Elektromaschine aus Figur 1 durchgeführt werden.
Figur 3 zeigt in schematischer ein Detail eines Stators der Drehstrom-Elektromaschine aus Figur 1 mit einer gewickelten Spule.
Figur 4 verdeutlicht in schematischer Darstellung einen Aspekt, der beim Wickeln der Spule zu berücksichtigen ist.
Figur 5 zeigt in schematischer Darstellung ein Detail einer Ausführungsform der erfindungsgemäßen Wickelvorrichtung.
Figur 6 zeigt in schematischer Darstellung eine Ausführungsform einer Wickelnadel der Ausführungsform der erfindungsgemäßen Wickelvorrichtung.
Figur 7 zeigt in schematischer Darstellung die Wickelnadel der erfindungsgemäßen Wickelvorrichtung und eine Nut einer Komponente der Elektromaschine aus Figur 1 bei Durchführung der Ausführungsform des erfindungsgemäßen Verfahrens.
Figur 8 zeigt in schematischer Darstellung die Wickelnadel der Ausführungsform der erfindungsgemäßen Wickelvorrichtung und ein Detail der Komponente des Beispiels der Elektromaschine bei Durchführung der Ausführungsform des erfindungsgemäßen Verfahrens.
Figur 9 zeigt in schematischer Darstellung die Wickelnadel der Ausführungsform der erfindungsgemäßen Wickelvorrichtung und ein Detail der Komponente des Beispiels der Elektromaschine bei Durchführung der Ausführungsform des erfindungsgemäßen Verfahrens.
Figur 10 zeigt in schematischer Darstellung die Wickelnadel der Ausführungsform der erfindungsgemäßen Wickelvorrichtung und ein Detail der Komponente des Beispiels der Elektromaschine bei Durchführung einer weiteren Ausführungsform des erfindungsgemäßen Verfahrens.
Figur 11 zeigt in schematischer Darstellung ein Beispiel für eine verteilte Wicklung
Figur 12 zeigt in schematischer Darstellung ein Detail der Ausführungsform der erfindungsgemäßen Wickelvorrichtung.

Die Figuren werden zusammenhängend und übergreifend beschrieben, gleichen Komponenten sind dieselben Bezugsziffern zugeordnet.

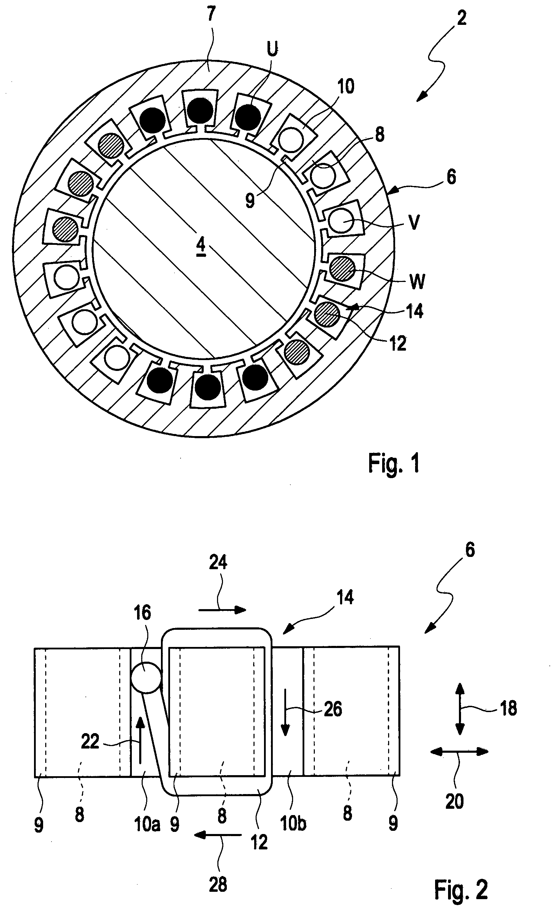

Die in Figur 1 schematisch dargestellte Drehstrom-Elektromaschine als Beispiel einer rotationssymmetrischen Elektromaschine 2 umfasst als erste Komponente einen Rotor 4, der von einem Stator 6 als zweite Komponente koaxial umschlossen ist. Dabei umfasst der Stator 6 an einer zylindrischen Innenwandung eine Vielzahl von Zähnen 8, wobei jeweils zwei unmittelbar benachbarte Zähne 8 durch eine Nut 10 voneinander getrennt sind. Jeder Zahn 8 ist hier an einem Grundkörper 7 der zweiten Komponente (Stator 6) befestigt, durch den auch ein Nutgrund einer jeweiligen Nut 10 gebildet wird. Weiterhin ist an einem Ende jedes Zahns 8 ein Flansch 9 angeordnet, der breiter als der Zahn 8 ist. Der Zahn 8 sowie der Flansch 9 sind in seitlicher Ansicht T-förmig ausgebildet. Ränder von Flanschen 9 unmittelbar benachbarter Zähne 8 bilden Nutschlitze, die Öffnungen von Nuten 10 zwischen jeweils zwei Zähnen 8 bilden.

Die aus Blechpaketen gebildeten Zähne 8 können im vorgestellten Beispiel auch als Statorzähne bezeichnet werden. Weitere Details zu dem Stator 6 gehen aus den Figuren 2, 3 und 4 hervor. Um mindestens einen Zahn 8 herum wird bei Durchführung der Ausführungsform des erfindungsgemäßen Verfahrens Draht 12 gewickelt und somit in jeweils zwei benachbarten Nuten 10, die einen jeweiligen Zahn 8 umschließen, angeordnet bzw. abgelegt, wodurch der Stator 6 als Komponente eine Vielzahl von Spulen 14 bzw. Wicklungen aufweist. Der Rotor 4 weist in Ausgestaltung eine Vielzahl nicht weiter dargestellter Permanentmagnete oder alternativ ebenfalls Spulen oder Kurzschlussstäbe auf. Zum Betreiben der Elektromaschine 2 wird durch die Spulen 14 Strom geleitet, wodurch ein Magnetfeld entsteht, das eine Kraft auf den drehbar gelagerten Rotor 4 ausübt und diesen in Rotation versetzt. Die Elektromaschine 2 umfasst in der Regel drei Phasen U, V, W.

Somit ist die Elektromaschine 2 als Motor zu betreiben, wobei elektrische in mechanische Energie umgewandelt wird. Alternativ oder ergänzend ist die Elektromaschine 2 als Generator zu betreiben, wobei mechanische in elektrische Energie umgewandelt wird, wenn der Rotor 4 relativ zu dem Stator 6 bewegt und in den Spulen 14 durch Induktion ein Stromfluss angeregt wird.

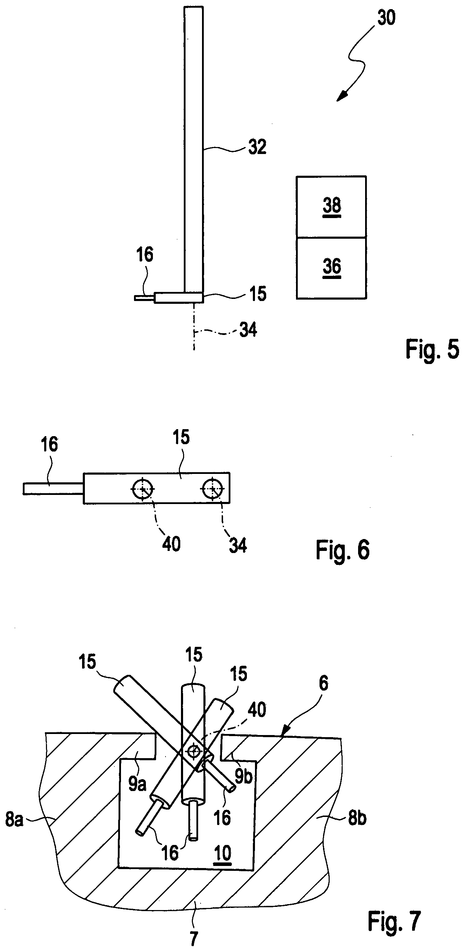

Bei Durchführung der Ausführungsform des Verfahrens sind unterschiedliche zueinander überlagerte Bewegungen einer Wickelnadel 15 als Bestandteil der Ausführungsform der Wickelvorrichtung 30 (Figur 5) relativ zu der Komponente der Elektromaschine 2, hier zu einem jeweiligen mit Draht 12 zu umwickelnden Zahn 8, durchzuführen.

Diesbezüglich ist anhand von Figur 2 in Draufsicht gezeigt, welche relativen Bewegungen durchzuführen sind, wenn zur Bereitstellung einer Spule 14 mit der Wickelvorrichtung 30 (Figur 5) auf einen Zahn 8 bzw. Statorzahn Draht 12 unter Bereitstellung einer konzentrierten Wicklung gewickelt wird. In der Darstellung aus Figur 2 ist jeweils ein Zahn 8, der durch gestrichelte Linien angedeutet ist, von dem darauf angeordneten, breiteren Flansch 9 abgedeckt. Hierbei wird eine Wickelnadel 15, die an einem Nadelhalter 32 angeordnet ist, verwendet. An einem Ende der Wickelnadel 15 ist eine Drahtförderdüse 16 angeordnet, die durch einen Nutschlitz, der durch Ränder unmittelbar benachbarter Flansche 9 begrenzt ist, hindurchgeführt und um einen jeweiligen Zahn 8 herum bewegt wird, wobei die Komponente, üblicherweise der Stator, unter Durchführung einer exzentrischen Drehung um eine sich ergebende Drehachse im Bereich eines jeweiligen Nutschlitzes parallel zu dem jeweiligen Nutschlitz, bspw. um diesen Nutschlitz herum, gedreht und somit relativ zu der Drehachse bewegt wird, wobei die Wickelnadel 15 in Richtung eines jeweiligen Zahns 8 ausgerichtet wird, und wobei aus der Drahtförderdüse 16 der Draht 12 gefördert wird. Eine Richtung einer ersten relativen Bewegung der Wickelnadel 15 relativ zu dem Zahn 8 ist in Figur 2 durch einen ersten Doppelpfeil 18 angedeutet, wobei die Wickelnadel 15 axial zu der Komponente bewegt wird. Dagegen ist eine Richtung einer zweiten, tangentialen Bewegung der Wickelnadel 15 und somit der Drahtförderdüse 16, die beim Wickeln relativ zu dem Zahn 8 bzw. dem Stator 6 bewegt, hier verschoben wird, durch einen zweiten Doppelpfeil 20 angedeutet ist. Außerdem ist die Wickelnadel 15 auch radial zu dem Stator 6 bewegbar.

Mit dieser Vorgehensweise zum Nadelwickeln ist ein Stator 6 mit konzentrierten oder verteilten Spulen 14 herzustellen. Hierbei wird der Draht 12 mit einer innen rotationssymmetrisch ausgebildeten Wickelnadel 15 unter Drahtzug direkt in die Nuten 10a, 10b des Stators 6 gewickelt.

Die an dem Ende der Wickelnadel 15 angeordnete Drahtförderdüse 16 wird dabei in radialer Richtung hier in eine erste Nut 10a des Stators 6 geführt und innerhalb dieser ersten Nut 10a entlang einer Achse eines Zahns 8 angeordnet. Außerdem wird der Stator 6 bei einer durchzuführenden Bewegung um den Nutschlitz dieser Nut 10a gedreht, wobei die Wickelnadel 15 in Richtung des Zahns 8 ausgerichtet wird. Danach wird der Nadelhalter 32 und somit die Drahtförderdüse 16 in axialer Richtung des Stators 6 bewegt, wodurch die Drahtförderdüse 16 am Ende der Wickelnadel 15 innerhalb der ersten Nut 10a ebenfalls in axialer Richtung (Pfeil 22) unter Durchführung der ersten relativen Bewegung bewegt wird, wobei in der ersten Nut 10a auf einer Außenwandung des Zahns 8 Draht 12 abgelegt wird. Sobald die Drahtförderdüse 16 am Ende der Wickelnadel 15 eine erste Stirnseite des Zahns 8 erreicht hat und aus der ersten Nut 10a in axialer Richtung austritt, wird die Wickelnadel 15 in einer zweiten Richtung tangential zu dem Stator 6 bewegt (Pfeil 24). Währenddessen wird auf einem hier oben angeordneten Abschnitt der Außenwandung des Zahns 8 ein weiterer Abschnitt des Drahts 12 abgelegt. Danach wird die Drahtförderdüse 16 am Ende der Wickelnadel 15 innerhalb einer zu der ersten Nut 10a unmittelbar benachbarten zweiten Nut 10b in entgegengesetzter axialer Richtung des Stators 6 unter Durchführung der ersten relativen Bewegung bewegt (Pfeil 26), wobei der Stator 6 um den Nutschlitz, durch den die Wickelnadel 15 geführt wird bzw. ist, gedreht und die Wickelnadel 15 dadurch in Richtung des Zahns 8 orientiert wird, wobei ein weiterer Abschnitt des Drahts 12 auf die Außenwandung des Zahns 8 abgelegt wird. Erreicht die Drahtförderdüse 16 der Wickelnadel 15 eine zweite Stirnseite des Zahns 8, wird die Wickelnadel 15 unter Durchführung der zweiten relativen Bewegung in die zweite Richtung (Pfeil 28) tangential bewegt und die Drahtförderdüse 16 wieder innerhalb der ersten Nut 10a angeordnet. Dabei wird die Drahtförderdüse 16 der Wickelnadel 15 zusätzlich in radialer Richtung um einen Betrag eines Durchmessers des Drahts 12 aus der ersten Nut 10a heraus bewegt. Somit wird die Drahtförderdüse 16 am Ende der Wickelnadel 15 mindestens einmal um den Zahn 8 herum geführt, wobei bei jeder Umrundung des Zahns 8 in axialer sowie tangentialer Richtung des Stators 6 um den Zahn 8 herum bzw. auf die Außenwandung des Zahns 8 eine Windung bzw. Lage Draht 12 gewickelt wird. Auf diese Weise können mehrere Windungen Draht 12 nebeneinander auf den zu bewickelnden Zahn 8 gewickelt werden. Die voranstehend genannten Schritte werden so lange wiederholt, bis eine festgelegte Anzahl an Windungen erzeugt ist.

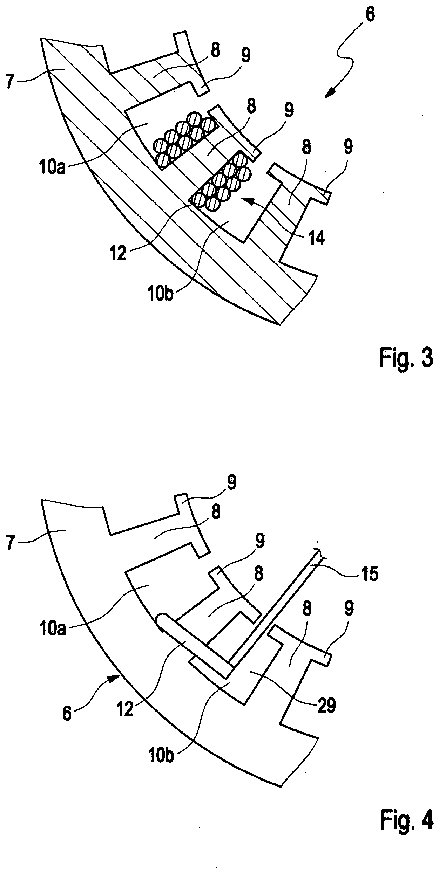

Wie anhand von Figur 3 gezeigt, wird mit dem beschriebenen Verfahren erreicht, den Draht 12 zum Herstellen der Spule 14 auf den Zahn 8 des Stators 6 möglichst gleichmäßig und schichtweise lagegenau zu wickeln, wodurch die benachbarten Nuten 10a, 10b mit möglichst vielen Windungen aus Draht 12 zu durchsetzen sind. Der hier gezeigte Draht 12 besteht bspw. aus Kupfer. Ist dieser Draht 12 dicht auf den Zahn 8 gewickelt, ist in den Nuten 10a, 10b ein hoher Kupferfüllfaktor zu erreichen, wodurch Kupferverluste reduziert werden können. Außerdem ist somit ein Wirkungsgrad des Stators 6 zu steigern und dessen Leistungsdichte zu erhöhen.

Wie jedoch Figur 4 zeigt, kann mit der Drahtförderdüse 16 am Ende der Wickelnadel 15, mit der der Draht 12 bereitgestellt wird, für den Fall, dass die Wickelnadel 15 und/oder die Drahtförderdüse 16 lediglich um einen Zahn 8 herum geführt wird, ohne dass die Wickelnadel 15 in Richtung des Zahns 8 ausgerichtet wird, aufgrund einer geringen Größe eines jeweiligen Nutschlitzes einer Nut 10a, 10b, wobei dieser Nutschlitz durch Flansche 9 unmittelbar benachbarter Zähne 8 begrenzt ist, nicht jede Stelle innerhalb einer Nut 10a, 10b erreicht werden, weshalb sich innerhalb einer Nut 10a, 10b ein schwer zugänglicher bzw. schlecht nutzbarer Bereich 29 ergibt. Eine Vergrößerung eines Nutschlitzes zur Verbesserung einer Zugänglichkeit einer Nut 10a, 10b ist jedoch zu vermeiden, da sich ein vergrößerter Nutschlitz negativ auf die elektromagnetischen Eigenschaften der Elektromaschine 2 auswirken würde.

Dies wird jedoch mit der beschriebenen Ausführungsform des Verfahrens vermieden, da die Komponente bei der Bewegung bezüglich bzw. relativ zu der sich ergebenden, bspw. virtuellen Drehachse gedreht wird. Die sich ergebende Drehachse verläuft hier parallel zu unmittelbar benachbarten Flanschen entlang eines Nutschlitzes durch den die Wickelnadel 15 jeweils geführt wird bzw. ist. Da die Wickelnadel 15 in Richtung eines jeweils zu umwickelnden Zahns 8 orientiert wird, ist es möglich, wie Figur 3 zeigt, Draht 12 auch in einen Bereich zwischen einem jeweiligen Flansch 9 und dem Grundkörper 7 bzw. einem Nutgrund u. a. direkt auf einer Außenwandung eines Zahns 8, hier in einer ersten Lage, abzulegen. Sofern Draht 12 auf einer zweiten Lage, die die erste Lage umschließt, abzulegen ist, wobei sich diese zweite Lage in Figur 3 bereits direkt unterhalb eines Nutschlitzes befindet, ist die Wickelnadel 15 in weiterer Ausgestaltung des Verfahrens direkt in Richtung des Nutgrunds und nicht mehr, wie zuvor, in Richtung des zu umwickelnden Zahns 8 zu orientieren.

Wie Figur 5 schematisch zeigt, weist die Wickelvorrichtung 30 einen hier stabförmigen Nadelhalter 32 auf, für den hier eine Nadelhalterachse 34 definiert ist. An einem Ende des Nadelhalters 32 ist die Wickelnadel 15 an einem Befestigungspunkt, der sich hier an einem Ende der Wickelnadel 15 befindet, befestigt, wobei, wie Figur 6 schematisch zeigt, die Nadelhalterachse 34 die Wickelnadel 15 in dem Befestigungspunkt kreuzt, das dem bereits erwähnten Ende der Wickelnadel 15 gegenüberliegt, an dem die Drahtförderdüse 16 angeordnet ist.

Außerdem zeigt Figur 5 als Halterung eine Positioniereinheit 36, an der die Komponente der Elektromaschine 2, deren Zähne 8 mit Draht 12 zu umwickeln sind, angeordnet und relativ zu dem Nadelhalter 32 und somit der Wickelnadel 15 positioniert wird, wobei die Komponente mit der Positioniereinheit 36 bei der Bewegung bezüglich der Drehachse bzw. relativ zu der Drehachse jeweils um die im Bereich jenes Nutschlitzes, bspw. durch jenen Nutschlitz verlaufende Drehachse gedreht wird, durch den die Wickelnadel 15 gerade geführt wird. Die relative erste und zweite Bewegung des Nadelhalters 32 und somit der Wickelnadel 15 und der Drahtförderdüse 16 relativ zu der Positioniereinheit 36 und somit der daran angeordneten Komponente der Elektromaschine 2 ist durch ein Kontrollgerät 38 der Wickelvorrichtung zu kontrollieren und somit zu steuern und/oder zu regeln. Entsprechend ist durch das Kontrollgerät 38 eine Drehung der Positioniereinheit 36 und somit der Komponente um den Nutschlitz zu kontrollieren, wodurch die Wickelnadel 15 und somit die Drahtförderdüse 16 zu kontrollieren ist.

Es ist möglich, dass die Wickelnadel 15 relativ zu der Komponente unterschiedliche Bewegungen ausführen kann. So sind durch Bewegen des Nadelhalters 32 relativ zu der Positioniereinheit 36 und somit der damit aufgenommenen Komponente, die anhand von Figur 2 beschriebenen relativen Bewegungen durchführbar, wobei die Wickelnadel 15 um einen Rand eines jeweiligen Flansches 9 eines Zahns 8 herum bewegt und dabei auch entlang von Nutschlitzen bewegt wird. Außerdem ist die Wickelnadel 15 sowie die Drahtförderdüse 16 parallel zu der Achse bzw. Längsachse des Zahns 8 zwischen dem Grundkörper 7 der Komponente und dem Flansch 9 zu bewegen.

Außerdem ist es möglich, den Nadelhalter 32 auch um die Nadelhalterachse 34 zu drehen, wodurch die Wickelnadel 15 sowie die Drahtförderdüse 16 relativ um die Nadelhalterachse 34 des Nadelhalters 32 herum zu drehen sind. Üblicherweise ist vorgesehen, dass die am Ende des Nadelhalters 32 angeordnete Wickelnadel 15 relativ zu der Nadelhalterachse 34 um einen Winkel von 90° orientiert ist. In weiterer möglicher Ausgestaltung der Wickelvorrichtung 30 ist jedoch denkbar, dass die Wickelnadel 15 und das Ende des Nadelhalters 32 über ein Gelenk miteinander verbunden sind, über das der Winkel zwischen der Nadelhalterachse 34 und der Wickelnadel 15 zu variieren ist, wodurch die Wickelnadel 15 relativ zu der Nadelhalterachse 34 auch schräg zu stellen ist. Allerdings ist auch in diesem Fall vorgesehen, dass die Nadelhalterachse 34 die Wickelnadel 15, wie in Figur 6 angedeutet, kreuzt. Außerdem sind der Nadelhalter 32 und somit auch die Wickelnadel 15 mit der Drahtförderdüse 16 entlang der Nadelhalterachse 34 hin und her zu bewegen.

Wie bereits anhand von Figur 2 beschrieben, sind der Zahn 8 sowie die Drahtförderdüse 16 unter Durchführung der genannten relativen Bewegungen relativ zueinander zu bewegen. Dabei ergibt sich, dass die Drahtförderdüse 16 relativ zu dem jeweiligen Zahn 8, auf den der Draht 12 zu wickeln ist, entlang der Achse des Zahns 8 und/oder relativ zu einer Außenwandung des Zahns 8 unterschiedliche Positionen einnimmt, die sich auf Grundlage einer Vorgabe (Figur 3), nach der der Draht 12 auf den Zahn 8 zu wickeln ist, ergeben.

In Figur 6 ist auf der Wickelnadel 15 eine Drehachse 40 angedeutet, deren Position sich abhängig von einer Position der Drahtförderdüse 16 ergibt, wenn diese innerhalb einer Nut 10 angeordnet ist. Dabei verläuft die Drehachse 40 durch jenen Punkt der Wickelnadel 15, der sich je nach aktueller Position der Drahtförderdüse 16 innerhalb der Nut gerade innerhalb oder zumindest im Bereich eines Nutschlitzes zwischen zwei unmittelbar benachbarten Flanschen 9 von unmittelbar benachbarten Zähnen 8 befindet.

In Abhängigkeit einer jeweiligen Position bzw. sämtlicher möglicher Positionen der Drahtförderdüse 16 relativ zu dem Zahn 8 wird eine Position der Drehachse 40 auf der Wickelnadel 15 verändert. Im Rahmen des Verfahrens ist vorgesehen, dass die Komponente, wobei auf einen jeweiligen Zahn 8 der Komponente Draht 12 gewickelt wird, bei der Bewegung relativ zu dem Nutschlitz um den Nutschlitz gedreht wird, wobei die sich ergebende Drehachse 40 der Komponente, um die die Komponente hier exzentrisch zu drehen ist, im Wesentlichen durch den Nutschlitz führt. Diese Drehachse 40 ist im Wesentlichen parallel zu den beiden Flanschen 9, die den Nutschlitz begrenzen, orientiert.

Wie weiterhin Figur 7 zeigt, ist eine Position der Drahtförderdüse 16 relativ zu einem Zahn 8a, 8b und somit auch innerhalb einer Nut 10 zu variieren. Die Position der Drahtförderdüse 16 innerhalb einer Nut 10 wird durch eine relative Bewegung der Wickelnadel 15 in radialer Richtung der Komponente, parallel zu einer Längsachse eines jeweiligen Zahns 8a, 8b bestimmt. Weiterhin wird die Komponente relativ zu der Wickelnadel 15 um jeden Nutschlitz, der durch unmittelbar benachbarte Flansche 9a, 9b begrenzt ist, herum gedreht, durch den die Wickelnadel 15 jeweils geführt ist. Dies kann bedeuten, dass die Komponente zunächst gedreht bzw. schräg gestellt wird und die Wickelnadel 15 erst danach durch den Nutschlitz geführt wird. Eine sich jeweils ergebende Drehachse 40, um die die Komponente exzentrisch zu drehen ist, verläuft bei der Darstellung aus Figur 7 parallel zu Rändern der unmittelbar benachbarten Flansche 9a, 9b durch den Punkt auf der Wickelnadel 15, der sich aktuell innerhalb des Nutschlitzes befindet. Dabei wird die Komponente, je nach dem, welcher Zahn 8a, 8b gerade mit Draht 12 zu umwickeln ist, um die Drehachse 40 gedreht, wobei die Wickelnadel 15 und somit die Drahtförderdüse 16 in Richtung eines ersten Zahns 8a oder in Richtung eines zweiten Zahns 8b ausgerichtet bzw. orientiert wird.

Üblicherweise verläuft die sich im Rahmen des Verfahrens ergebende, bspw. virtuelle Drehachse 40 im Bereich des Nutschlitzes, der eine bestimmte Ausdehnung, d. h. Breite und Höhe aufweist. Dies kann auch bedeuten, dass die Drehachse 40 in der Nähe des Nutschlitzes, d. h. innerhalb der Nut oder außerhalb der Nut und somit außerhalb des Nutschlitzes, jedoch im Wesentlichen parallel zu dem Nutschlitz verläuft. Dabei beträgt ein Abstand der Drehachse 40 zu dem Nutschlitz in der Regel maximal ein einstelliges Vielfaches einer Breite bzw. eines Durchmessers der Wickelnadel 15, wenn die Drehachse 40 im Bereich des Nutschlitzes angeordnet ist. Unabhängig von einer genauen Position der Drehachse 40, die im Bereich des Nutschlitzes verläuft, ist bzw. sind die Komponente und/oder der Nadelhalter 32 exzentrisch zu drehen.

In Ausgestaltung der Erfindung wird zunächst eine relative Bewegung zwischen der Komponente und der Wickelnadel 15, an deren Ende die Drahtförderdüse 16 angeordnet ist, durchgeführt, die eine Schrägstellung der Komponente zu der Wickelnadel 15 realisiert. Dabei wird die Drehung jeweils um die entlang des Nutschlitzes führende Drehachse 40 durchgeführt. Hierbei ist es möglich, dass die Komponente und/oder die Wickelnadel 15 um die Drehachse 40 durch den Nutschlitz bzw. nahe des Nutschlitzes gedreht wird bzw. werden. Demnach wird die Wickelnadel 15 um die Drehachse 40 relativ zu der Komponente und/oder die Komponente um die Drehachse 40 relativ zu der Wickelnadel 15 gedreht. Hierbei wird die Komponente bei der durchzuführenden Bewegung direkt um die Drehachse 40 exzentrisch zu ihrer Mittelachse gedreht. Alternativ oder ergänzend ist es auch möglich, dass die Komponente zentrisch und demnach direkt um ihre Mittelachse gedreht wird. Weiterhin führen die Wickelnadel 15 sowie die Komponente relativ zueinander eine translatorische Bewegung in mindestens eine Raumrichtung aus. Diese mindestens eine Bewegung ist mindestens einer durchführbaren rotatorischen Bewegung bzw. Drehung der Komponente und/oder der Wickelnadel 15 relativ zueinander überlagert.

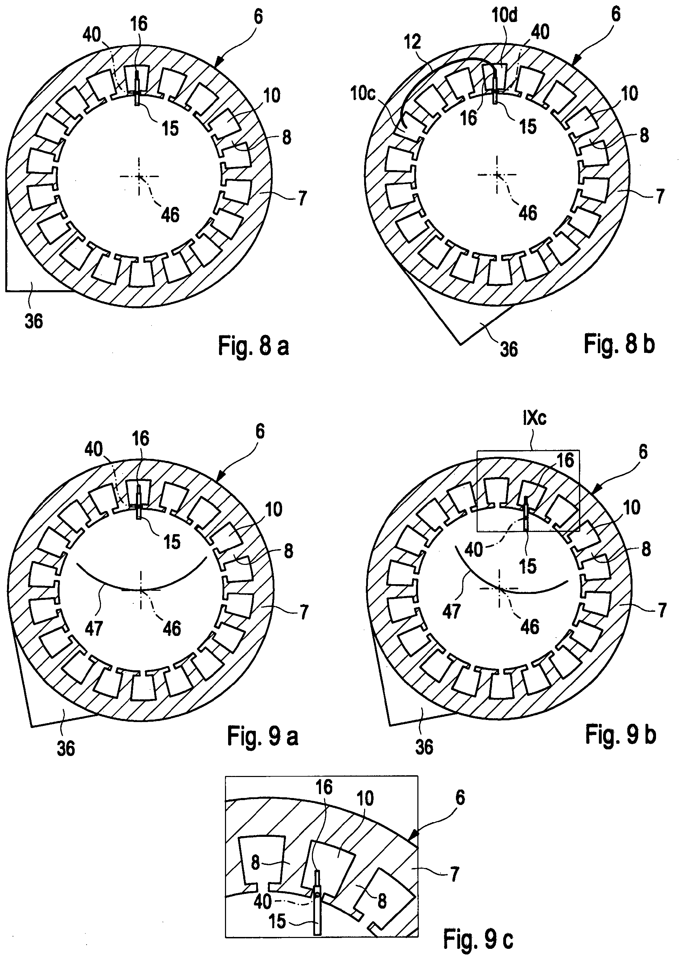

Wie die weiteren Figuren 8, 9 und 10 zeigen, ist zur Realisierung des erfindungsgemäßen Verfahrens einerseits vorgesehen, die Wickelnadel 15 üblicherweise durch eine Bewegung in mindestens zwei Raumrichtungen relativ zu der Komponente zu verschieben, wobei die Komponente üblicherweise um ihre Mittelachse 46 gedreht und die Drahtförderdüse 16 in einer jeweiligen Nut 10 angeordnet wird. Demnach sind hierbei translatorische Bewegungen in mindestens zwei Richtungen und eine rotatorische Bewegung überlagert. Ergänzend wird der an der Positioniereinheit 36 anzuordnende Stator 6 als Komponente des Elektromotors 2, auf dessen Zähne 8 der Draht 12 zu wickeln ist, relativ zu dem Nadelhalter 32 der Wickelvorrichtung 30 bewegt, wobei die Komponente um ihre Mittelachse 46 zentrisch gedreht wird. So ist es u. a. möglich, die Wickelnadel 15, wie Figur 8b schematisch zeigt, von einer ersten Nut 10c zu einer weiteren Nut 10d umzupositionieren, wobei zwischen diesen beiden Nuten 10c, 10d, mindestens eine weitere Nut angeordnet ist und dabei Draht 12 zwischen diesen beiden genannten Nuten 10c, 10d zu verlegen ist, wobei eine verteilte Wicklung bereitzustellen ist.

Wie Figur 9 zeigt, wird die Mittelachse 46 der Komponente und somit des Stators 6 entlang einer Kreisbahn 47 um die Drehachse 40, die hier durch einen Nutschlitz der Komponente sowie die Wickelnadel 15 verläuft, exzentrisch gedreht. Somit ergibt sich, wie anhand der Figuren 9a und 9b verdeutlicht, dass die Komponente und somit eine Nut 10 relativ zu der hier ortsfest angeordneten und somit hinsichtlich ihrer Position fixierten Wickelnadel 15 gedreht wird. Ein Radius der Kreisbahn 47 ergibt sich aus einem Abstand der Drehachse 40 zu der Mittelachse 46.

Für die Zähne 8 können unabhängig von den voranstehend beschriebenen Aspekten des Verfahrens konzentrierte oder verteilte Wicklungen bereitgestellt werden. Falls konzentrierte Wicklungen bereitzustellen sind, wird jeder Zahn 8, soweit wie erforderlich, mit Draht umwickelt. Sobald ein Zahn 8 komplett mit Draht 12 umwickelt ist, wird ein nächster Zahn 8 mit Draht 12 umwickelt. In beiden Fällen jedoch wird die Komponente bzw. der Stator 6 um ihre bzw. seine Mittelachse 46 gedreht, um die Wickelnadel 15 jeweils in einer Nut 10 zu positionieren, die benachbart zu einem Zahn 8 ist, der jeweils zumindest teilweise mit Draht 12 zu umwickeln ist.

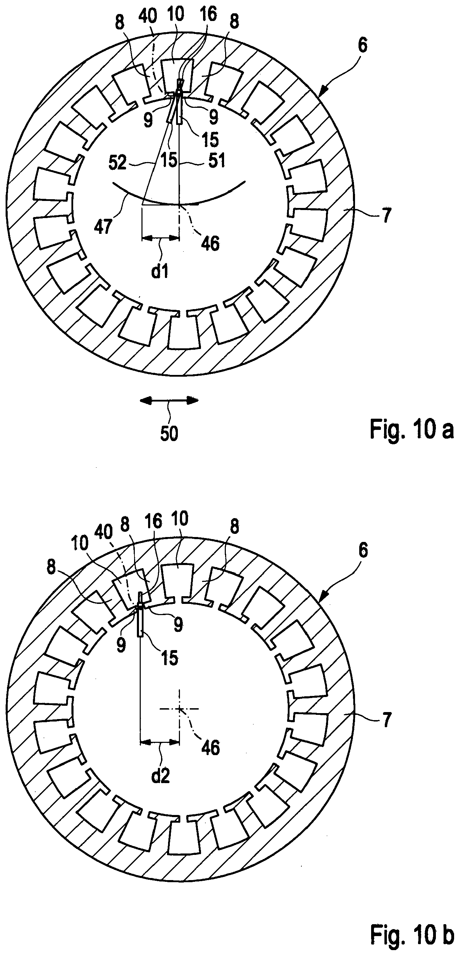

Wie bspw. in Figur 10a angedeutet, ist es möglich, dass die Nadelhalterachse 34 mit der daran angeordneten Wickelnadel 15 und der Stator 6 bezüglich bzw. relativ zu der sich hier ergebenden Drehachse 40 sowie relativ zueinander bewegt, in Ausgestaltung gedreht werden. Hierbei nehmen die Wickelnadel 15 und die Komponente bzw. der Stator 6 eine Ist-Stellung ein, die in Figur 10a durch,eine erste Linie 51 angedeutet ist. Bei dieser Ist-Stellung ist die Wickelnadel 15 senkrecht zu einem Nutgrund der Nut 10 orientiert. Außerdem ist in Figur 10a durch eine zweite Linie eine SollStellung 52 angedeutet, die die Wickelnadel 15 und die Komponente nach Durchführung einer relativen Bewegung zueinander sowie zu der Drehachse 40 einnehmen.

In Figur 10b ist gezeigt, wie zunächst die Komponente um die Mittelachse 46 zentrisch gedreht die Mittelachse 46 der Komponenten bzw. des Stators 6 anschließend um die Distanz d linear verschoben wird, um eine Schrägstellung der Wickelnadel 15 zu ermöglichen. Falls für die Komponente eine verteilte Wicklung bereitzustellen ist, wird die Wickelnadel 15 relativ zu der Komponente zwischen mehreren Nuten 10 hin und her bewegt, zwischen denen mehrere Zähne 8 bzw. Nuten 10 angeordnet sein können. Durch Drehen des Stators 6 um einen jeweiligen Nutschlitz werden auch Winkel der Wickelnadel 15 relativ zu einem jeweiligen Zahn 8 bzw. einer jeweiligen Nut 10 verändert.

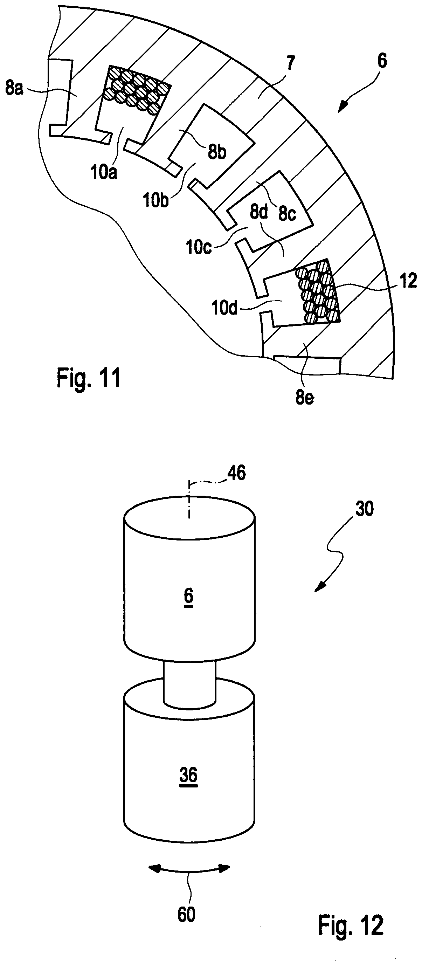

Die weitere schematische Darstellung eines Details der Wickelvorrichtung 30 aus Figur 12 zeigt die Positioniereinheit 36 mit dem darauf angeordneten Stator 6. Mit dieser Wickelvorrichtung 30 sind der Stator 6 bzw. die Komponente über die Positioniereinheit 36 sowie die Wickelnadel 15 über den Wickelnadelhalter 32 relativ zueinander translatorisch und/oder rotatorisch zu bewegen. Wie anhand von Figur 12 durch einen gebogenen Doppelpfeil 60 angedeutet, ist der Stator 6 über die Positioniereinheit 36 relativ zu der Wickelnadel 15 zentrisch zu drehen. In weiterer Ausgestaltung wird der Stator 6 exzentrisch um eine Drehachse gedreht, die durch einen Nutschlitz verläuft, durch die die Wickelnadel 15 jeweils geführt und in der die Drahtförderdüse 16 jeweils angeordnet ist. Falls der Stator 6 exzentrisch gedreht wird, wird die Mittelachse 46 direkt um die Drehachse, die bspw. durch den jeweiligen Nutschlitz verläuft, gedreht. Bei einer zentrischen Drehung, wird der Stator 6 um dessen Mittelachse 46 gedreht.

Somit ist eine relative Verstellung der Wickelnadel 15 und somit der Drahtförderdüse 16 relativ zu einem Zahn 8 bzw. einer jeweiligen Nut 10 durch Verschieben des Stators 6 relativ zu der Wickelnadel 15 sowie durch exzentrisches Drehen der Mittelachse 46 des Stators 6 bzw. der Komponente um die Drehachse 40, die durch einen jeweiligen Nutschlitz verläuft, zu erreichen. Hierzu wird der an der Positioniereinheit 36 angeordnete Stator 6 abhängig von einem vorzusehenden Wickelschema als Vorgabe mit der Positioniereinheit 36 als Halterung relativ zu dem Nadelhalter 32 um den Nutschlitz gedreht, wobei Draht 12 in verschiedenen Nuten 10 zu führen und abzulegen ist. Dabei ist die Wickelnadel 15 auch in radialer Richtung relativ zu der Mittelachse 46 des Stators 6 zu verschieben, wodurch auch Draht 12, der aus der Drahtförderdüse 16 gefördert wird, an schwer zugänglichen Punkten innerhalb einer Nut 10 platziert und definiert abgelegt werden kann. Üblicherweise werden im Rahmen des Verfahrens sowohl der Nadelhalter 32 als auch der Stator 6 je nach Anforderung relativ zueinander bewegt und somit verschoben und/oder gedreht, wodurch unter Verschiebung der Wickelnadel 15 relativ zu einer jeweiligen Nut 10 sowie durch Drehen des Stators 6 um den Nutschlitz, der eine Öffnung der jeweiligen Nut bildet, die Drahtförderdüse 16 innerhalb der jeweiligen Nut 10 zu positionieren ist.

In Ausgestaltung wird der Stator 6 um die Drehachse 40 exzentrisch gedreht. Alternativ oder ergänzend wird der Nadelhalter 32 exzentrisch um die Drehachse 40 gedreht. Weiterhin kann der Stator 6 zentrisch, d. h. um die Mittelachse 46, gedreht sowie relativ zu dem Nadelhalter 32 translatorisch bewegt werden. Es ist ebenfalls möglich, dass der Stator 6 zentrisch gedreht und der Nadelhalter 32 und somit die Wickelnadel 15 translatorisch bewegt wird. In weiterer Ausgestaltung kann der Nadelhalter 32 zentrisch um die Nadelhalterachse 34 und relativ zu dem Stator 6 exzentrisch um die Drehachse 40 gedreht werden.

## Patentansprüche

1. Verfahren zum Wickeln von Draht (12) auf mindestens einen Zahn (8a, 8b, 8c, 8d, 8e) einer Komponente einer Elektromaschine (2), wobei die Komponente einen Grundkörper (7) mit mehreren an dem Grundkörper (7) angeordneten Zähnen (8, 8a, 8b, 8c, 8d, 8e) aufweist, wobei jeder Zahn (8, 8a, 8b, 8c, 8d, 8e) einerseits durch den Grundkörper (7) und andererseits durch einen Flansch (9, 9a, 9b) begrenzt ist, wobei zwischen zwei unmittelbar benachbarten Zähnen (8, 8a, 8b, 8c, 8d, 8e) eine Nut (10, 10a, 10b, 10c, 10d) angeordnet ist, die einen Nutschlitz als Öffnung aufweist, der durch unmittelbar benachbarte Flansche (9a, 9b) begrenzt ist, wobei bei dem Verfahren eine Wickelnadel (15) verwendet wird, an deren Ende eine Drahtförderdüse (16) angeordnet ist, wobei bei Durchführung des Verfahrens:
- die Drahtförderdüse (16) innerhalb einer Nut (10, 10a, 10b, 10c, 10d) neben einem jeweils zu umwickelnden Zahn (8, 8a, 8b, 8c, 8d, 8e) angeordnet und die Wickelnadel (15) durch einen Nutschlitz dieser Nut (10, 10a, 10b, 10c, 10d) geführt wird,
- und die Komponente der Elektromaschine (2) und ein die Wickelnadel (15) haltender stabförmiger Nadelhalter (32), für den eine Nadelhalterachse (34) definiert ist, die die Wickelnadel (15) an dem Ende kreuzt, das der Drahtförderdüse (16) gegenüber liegt, relativ zueinander bezüglich einer sich ergebenden Drehachse (40) bewegt werden, die im Bereich eines jeweiligen Nutschlitzes verläuft, durch den die Wickelnadel (15) geführt wird, wobei die Wickelnadel (15) in Richtung des jeweils zu umwickelnden Zahns (8, 8a, 8b, 8c, 8d, 8e) gerichtet und Draht (12) aus der Drahtförderdüse (16) gefördert wird, wobei der Nadelhalter (32) mit der Wickelnadel (15) und die Nadelhalterachse (34) um die sich ergebende Drehachse (40) herum exzentrisch gedreht werden, wobei die sich jeweils ergebende Drehachse (40) parallel zu Rändern der unmittelbar benachbarten Flansche (9a, 9b), d.h. im Wesentlichen parallel zum Nutschlitz, durch den Punkt auf der Wickelnadel (15), der sich aktuell innerhalb des Nutschlitzes befindet, verläuft.

2. Verfahren nach Anspruch 1, bei dem die Komponente der Elektromaschine (2) und der die Wickelnadel (15) haltende Nadelhalter (32) relativ zueinander um die Drehachse (40) gedreht werden.

3. Verfahren nach Anspruch 1 oder 2, bei dem der Nadelhalter (32) mit der Wickelnadel (15) zu der Komponente in axialer Richtung, radialer Richtung und/oder tangentialer Richtung translatorisch bewegt wird.

4. Verfahren nach einem der voranstehenden Ansprüche, das für eine rotationssymmetrische Komponente, die eine zentrale Mittelachse (46) aufweist, durchgeführt wird.

5. Verfahren nach Anspruch 4, bei dem die Komponente um ihre Mittelachse (46) zentrisch gedreht wird.

6. Verfahren nach Anspruch 4 oder 5, bei dem die Mittelachse (46) der Komponente um die durch den Nutschlitz verlaufende Drehachse (40) exzentrisch gedreht wird.

7. Verfahren nach einem der voranstehenden Ansprüche, bei dem die Komponente translatorisch bewegt wird.

8. Verfahren nach einem der voranstehenden Ansprüche, bei dem der Nadelhalter (32) mit der Wickelnadel (15) relativ zu der Komponente gedreht wird.

9. Verfahren nach einem der voranstehenden Ansprüche, bei dem die Wickelnadel (15) senkrecht zu der Nadelhalterachse (34) gedreht wird.

10. Verfahren nach einem der voranstehenden Ansprüche, bei dem eine verteilte Wicklung bereitgestellt wird, wobei die Wickelnadel (15) nacheinander nur durch jede k-te Nut der Komponente geführt wird, wobei zwischen zwei Nuten, durch die die Wickelnadel nacheinander geführt wird, k-1 Nuten angeordnet sind.

11. Verfahren nach einem der voranstehenden Ansprüche, bei dem eine konzentrierte Wicklung bereitgestellt wird, wobei eine Bewegung der Drahtförderdüse (16) um den Zahn (8, 8a, 8b, 8c, 8d, 8e) herum aus einer Überlagerung einer ersten relativen Bewegung und einer zweiten relativen Bewegung resultiert, wobei diese beiden relativen Bewegungen jeweils einander abwechselnd durchgeführt werden, wobei die Drahtförderdüse (16) zwischen zwei Endpunkten, durch zwei unmittelbar benachbarte Nuten (10, 10a, 10b, 10c, 10d), zwischen denen der jeweilige Zahn (8, 8a, 8b, 8c, 8d, 8e) angeordnet ist, bewegt wird und dabei eine erste relative Bewegung ausführt, wobei die Drahtförderdüse (16), wenn die Drahtförderdüse (16) jeweils an einem der beiden Endpunkte angeordnet ist, senkrecht zu einer Richtung der ersten relativen Bewegung relativ zu dem Zahn (8, 8a, 8b, 8c, 8d) um eine Strecke bewegt wird, die größer als eine Breite des Zahns (8, 8a, 8b, 8c, 8d) ist, und dabei die zweite relative Bewegung ausführt.

12. Wickelvorrichtung zum Wickeln von Draht (12) auf mindestens einen Zahn (8, 8a, 8b, 8c, 8d, 8e) einer Komponente einer Elektromaschine (2), wobei die Komponente einen Grundkörper (7) mit mehreren an dem Grundkörper (7) angeordneten Zähnen (8, 8a, 8b, 8c, 8d, 8e) aufweist, wobei jeder Zahn (8, 8a, 8b, 8c, 8d, 8e) einerseits durch den Grundkörper (7) und andererseits durch einen Flansch (9, 9a, 9b) begrenzt ist, wobei zwischen zwei unmittelbar benachbarten Zähnen (8, 8a, 8b, 8c, 8d, 8e) eine Nut (10, 10a, 10b, 10c, 10d) angeordnet ist, die einen Nutschlitz als Öffnung aufweist, der durch unmittelbar benachbarte Flansche (9a, 9b) begrenzt ist,
wobei die Wickelvorrichtung (30) eine Wickelnadel (15), an deren Ende eine Drahtförderdüse (16) angeordnet ist, und eine Positioniereinheit (36), an der die Komponente anzuordnen ist, aufweist,
wobei die Drahtförderdüse (16) innerhalb einer Nut (10, 10a, 10b, 10c, 10d) neben einem jeweils zu umwickelnden Zahn (8, 8a, 8b, 8c, 8d, 8e) anzuordnen und die Wickelnadel (15) durch einen Nutschlitz dieser Nut (10, 10a, 10b, 10c, 10d) des jeweils zu umwickelnden Zahns (8, 8a, 8b, 8c, 8d, 8e) zu führen ist, wobei die Komponente der Elektromaschine (2) mit der Positioniereinheit (36) und ein die Wickelnadel (15) haltender stabförmiger Nadelhalter (32), für den eine Nadelhalterachse (34) definiert ist, die die Wickelnadel (15) an dem Ende kreuzt, das der Drahtförderdüse (16) gegenüber liegt, relativ zueinander bezüglich einer sich ergebenden Drehachse (40) zu bewegen sind, die im Bereich eines jeweiligen Nutschlitzes verläuft, durch den die Wickelnadel (15) geführt ist, wobei die Wickelnadel (15) in Richtung des jeweils zu umwickelnden Zahns (8, 8a, 8b, 8c, 8d, 8e) zu richten und Draht (12) aus der Drahtförderdüse (16) zu fördern ist, wobei der Nadelhalter (32) mit der Wickelnadel (15) und die Nadelhalterachse (34) um die sich ergebende Drehachse (40) herum exzentrisch zu drehen sind, wobei die sich jeweils ergebende Drehachse (40) parallel zu Rändern der unmittelbar benachbarten Flansche (9a, 9b) durch den Punkt auf der Wickelnadel (15), der sich aktuell innerhalb des Nutschlitzes befindet, verläuft.

13. Wickelvorrichtung nach Anspruch 12, die dazu ausgebildet ist, ein Verfahren nach einem der Ansprüche 1 bis 11 durchzuführen.

14. Wickelvorrichtung nach einem der Ansprüche 12 oder 13, die ein Kontrollgerät (38) aufweist, das dazu ausgebildet ist, einen Ablauf einer relativen Bewegung zwischen der Wickelnadel (15) und der Komponente zu kontrollieren, wobei das Kontrollgerät (38) dazu ausgebildet ist, das Verfahren nach einem der Ansprüche 1 bis 11 zu kontrollieren.

## Claims

1. Method for winding wire (12) onto at least one tooth (8a, 8b, 8c, 8d, 8e) of a component of an electric machine (2), wherein the component has a base body (7) having a plurality of teeth (8, 8a, 8b, 8c, 8d, 8e) arranged on the base body (7), wherein each tooth (8, 8a, 8b, 8c, 8d, 8e) is bounded on one side by the base body (7) and on the other side by a flange (9, 9a, 9b), wherein between two immediately adjacent teeth (8, 8a, 8b, 8c, 8d, 8e) there is arranged a groove (10, 10a, 10b, 10c, 10d), which has a groove slot as an opening which is bounded by immediately adjacent flanges (9a, 9b), wherein, in the method, use is made of a winding needle (15) at the end of which a wire delivery nozzle (16) is arranged, wherein, when carrying out the method:
- the wire delivery nozzle (16) is arranged within a groove (10, 10a, 10b, 10c, 10d) beside a respective tooth (8, 8a, 8b, 8c, 8d, 8e) to be wrapped, and the winding needle (15) is guided through a groove slot of said groove (10, 10a, 10b, 10c, 10d),
- and the component of the electric machine (2) and a rod-shaped needle holder (32) which holds the winding needle (15) and for which a needle holder axis (34) is defined, said needle holder axis crossing the winding needle (15) at the end opposite the wire delivery nozzle (16), are moved relative to each other with respect to a resulting axis of rotation (40), which extends in the region of a respective groove slot through which the winding needle (15) is guided, wherein the winding needle (15) is oriented in the direction of the respective tooth (8, 8a, 8b, 8c, 8d, 8e) to be wrapped and wire (12) is delivered from the wire delivery nozzle (16),
wherein the needle holder (32) with the winding needle (15) and the needle holder axis (34) are rotated eccentrically around the resulting axis of rotation (40), wherein the respective resulting axis of rotation (40) extends parallel to the edges of the immediately adjacent flanges (9a, 9b), i.e. substantially parallel to the groove slot, through the point on the winding needle (15) which is currently situated inside the groove slot.

2. Method according to claim 1, in which the component of the electric machine (2) and the needle holder (32) holding the winding needle (15) are rotated relative to one another about the axis of rotation (40).

3. Method according to claim 1 or 2, in which the needle holder (32) with the winding needle (15) is moved in translation in the axial direction, radial direction and/or tangential direction in relation to the component.

4. Method according to any of the preceding claims, which is carried out for a rotationally symmetrical component which has a central centre axis (46).

5. Method according to claim 4, in which the component is rotated centrally about its centre axis (46).

6. Method according to claim 4 or 5, in which the centre axis (46) of the component is rotated eccentrically around the axis of rotation (40) extending through the groove slot.

7. Method according to any of the preceding claims, in which the component is moved in translation.

8. Method according to any of the preceding claims, in which the needle holder (32) with the winding needle (15) is rotated relative to the component.

9. Method according to any of the preceding claims, in which the winding needle (15) is rotated perpendicular to the needle holder axis (34).

10. Method according to any of the preceding claims, in which a distributed winding is provided, wherein the winding needle (15) is successively guided only through every kth groove of the component, wherein k-1 grooves are arranged between two grooves through which the winding needle is successively guided.

11. Method according to any of the preceding claims, in which a concentrated winding is provided, wherein a movement of the wire delivery nozzle (16) around the tooth (8, 8a, 8b, 8c, 8d, 8e) results from a superposition of a first relative movement and a second relative movement, wherein these two relative movements are carried out alternately, wherein the wire delivery nozzle (16) is moved between two end points, through two immediately adjacent grooves (10, 10a, 10b, 10c, 10d) between which the respective tooth (8, 8a, 8b, 8c, 8d, 8e) is arranged, and thereby performs a first relative movement, wherein the wire delivery nozzle (16), when the wire delivery nozzle (16) is arranged at each of the two end points, is moved perpendicular to a direction of the first relative movement relative to the tooth (8, 8a, 8b, 8c, 8d) by a distance which is greater than a width of the tooth (8, 8a, 8b, 8c, 8d), and thereby performs the second relative movement.

12. Winding device for winding wire (12) onto at least one tooth (8, 8a, 8b, 8c, 8d, 8e) of a component of an electric machine (2), wherein the component has a base body (7) having a plurality of teeth (8, 8a, 8b, 8c, 8d, 8e) arranged on the base body (7), wherein each tooth (8, 8a, 8b, 8c, 8d, 8e) is bounded on one side by the base body (7) and on the other side by a flange (9, 9a, 9b), wherein between two immediately adjacent teeth (8, 8a, 8b, 8c, 8d, 8e) there is arranged a groove (10, 10a, 10b, 10c, 10d), which has a groove slot as an opening which is bounded by immediately adjacent flanges (9a, 9b), wherein the winding device (30) has a winding needle (15) at the end of which a wire delivery nozzle (16) is arranged, and a positioning unit (36) on which the component is to be arranged,
wherein the wire delivery nozzle (16) is arranged within a groove (10, 10a, 10b, 10c, 10d) beside a respective tooth (8, 8a, 8b, 8c, 8d, 8e) to be wrapped, and the winding needle (15) is to be guided through a groove slot of said groove (10, 10a, 10b, 10c, 10d) of the respective tooth (8, 8a, 8b, 8c, 8d, 8e) to be wrapped, wherein the component of the electric machine (2) with the positioning unit (36) and a rod-shaped needle holder (32) which holds the winding needle (15) and for which a needle holder axis (34) is defined, said needle holder axis crossing the winding needle (15) at the end opposite the wire delivery nozzle (16), are moved relative to each other with respect to a resulting axis of rotation (40), which extends in the region of a respective groove slot through which the winding needle (15) is guided, wherein the winding needle (15) is to be oriented in the direction of the respective tooth (8, 8a, 8b, 8c, 8d, 8e) to be wrapped and wire (12) is to be delivered from the wire delivery nozzle (16),
wherein the needle holder (32) with the winding needle (15) and the needle holder axis (34) are rotated eccentrically around the resulting axis of rotation (40), wherein the respective resulting axis of rotation (40) extends parallel to edges of the immediately adjacent flanges (9a, 9b) through the point on the winding needle (15) which is currently situated inside the groove slot.

13. Winding device according to claim 12, which is designed to carry out a method according to any of claims 1 to 11.

14. Winding device according to any of claims 12 or 13, which has a control device (38) which is designed to control a sequence of a relative movement between the winding needle (15) and the component, wherein the control device (38) is designed to control the method according to any of claims 1 to 11.

## Revendications

1. Procédé de bobinage d'un fil (12) sur au moins une dent (8a, 8b, 8c, 8d, 8e) d'un composant d'une machine électrique (2), le composant comportant un corps de base (7) avec plusieurs dents (8, 8a, 8b, 8c, 8d, 8e) disposées sur le corps de base (7), chaque dent (8, 8a, 8b, 8c, 8d, 8e) étant délimitée d'un côté par le corps de base (7) et d'un autre côté par une joue (9, 9a, 9b), une gorge (10, 10a, 10b, 10c, 10d) étant disposée entre deux dents (8, 8a, 8b, 8c, 8d, 8e) directement voisines, qui comporte une fente de gorge en tant qu'ouverture, qui est formée par des joues immédiatement adjacentes (9a, 9b), une aiguille de bobinage (15) étant utilisée dans le procédé, à l'extrémité de laquelle est disposée une buse d'avance de fil (16), dans laquelle lors de l'exécution du procédé :
- la buse d'avance de fil (16) est disposée à l'intérieur d'une gorge (10, 10a, 10b, 10c, 10d) à côté d'une dent (8, 8a, 8b, 8c, 8d, 8e) à bobiner et l'aiguille de bobinage (15) est introduite à travers une fente de cette gorge (10, 10a, 10b, 10c, 10d),
- et le composant de la machine électrique (2) et un support d'aiguille (32) en forme de barre tenant l'aiguille de bobinage (15) pour lequel un axe de support d'aiguille (34) est défini, qui croise l'aiguille de bobinage (15) à l'extrémité opposée à la buse d'avance de fil (16), sont déplacés l'un à l'autre par rapport à un axe de rotation en résultant (40) qui passe dans la zone d'une fente de gorge concernée à travers laquelle l'aiguille de bobinage (15) est introduite, l'aiguille de bobinage (15) étant dirigée en direction de ladite dent (8, 8a, 8b, 8c, 8d, 8e) à bobiner et le fil (12) étant débité par la buse d'avance de fil (16), le support d'aiguille (32) avec l'aiguille de bobinage (15) et l'axe du support d'aiguille (34) étant tournés de manière excentrique autour de l'axe de rotation résultant (40), l'axe de rotation résultant (40) étant parallèle aux bords des joues immédiatement adjacentes (9a, 9b), c'est-à-dire sensiblement parallèle à la fente de gorge, par la pointe de l'aiguille de bobinage (15) qui se trouve actuellement dans la fente de gorge.

2. Procédé selon la revendication 1, dans lequel le composant de la machine électrique (2) et le support d'aiguille (32) qui maintient l'aiguille de bobinage (15) sont tournés l'un à l'autre autour de l'axe de rotation (40).

3. Procédé selon la revendication 1 ou 2, dans lequel le support d'aiguille (32) avec l'aiguille de bobinage (15) est déplacé en translation par rapport au composant dans une direction axiale, une direction radiale et/ou une direction tangentielle.

4. Procédé selon l'une quelconque des revendications précédentes, qui est réalisé pour un composant à symétrie de révolution qui a un axe central (46).

5. Procédé selon la revendication 4, dans lequel le composant est tourné centralement autour de son axe central (46).

6. Procédé selon la revendication 4 ou 5, dans lequel l'axe central (46) du composant est tourné de manière excentrique autour de l'axe de rotation (40) s'étendant à travers la fente de gorge.

7. Procédé selon l'une quelconque des revendications précédentes, dans lequel le composant est déplacé en translation.

8. Procédé selon l'une quelconque des revendications précédentes, dans lequel le support d'aiguille (32) avec l'aiguille de bobinage (15) est tourné par rapport au composant.

9. Procédé selon l'une quelconque des revendications précédentes, dans lequel l'aiguille de bobinage (15) est tournée perpendiculairement à l'axe de support d'aiguille (34).

10. Procédé selon l'une quelconque des revendications précédentes, dans lequel un bobinage réparti est prévu, l'aiguille de bobinage (15) étant guidée successivement uniquement à travers chaque k-ième gorge du composant, k-1 gorges étant disposées entre deux gorges à travers lesquelles l'aiguille de bobinage est successivement guidée.

11. Procédé selon l'une quelconque des revendications précédentes, dans lequel un bobinage concentré est prévu, dans lequel un déplacement de la buse d'avance de fil (16) autour de la dent (8, 8a, 8b, 8c, 8d, 8e) résulte d'une superposition d'un premier déplacement relatif et d'un second déplacement relatif, ces deux déplacements relatifs étant effectués alternativement, la buse d'avance de fil (16) étant déplacée entre deux points d'extrémité à travers deux gorges immédiatement adjacentes (10, 10a, 10b, 10c, 10d), entre lesquelles la dent respective (8, 8a, 8b, 8c, 8d, 8e) est disposée, est déplacée, effectuant ainsi un premier déplacement relatif, dans lequel lorsque la buse d'avance de fil (16) est disposée à l'un des deux points d'extrémité dans chaque cas, la buse d'avance de fil (16) est déplacée perpendiculairement à une direction du premier déplacement relatif par rapport à la dent (8, 8a, 8b, 8c, 8d) d'une distance supérieure à une largeur de la dent (8, 8a, 8b, 8c, 8d), effectuant ainsi le second déplacement relatif.

12. Dispositif de bobinage pour le bobinage d'un fil (12) sur au moins une dent (8, 8a, 8b, 8c, 8d, 8e) d'un composant d'une machine électrique (2), le composant comportant un corps de base (7) avec plusieurs dents (8, 8a, 8b, 8c, 8d, 8e) disposées sur le corps de base (7), chaque dent (8, 8a, 8b, 8c, 8d, 8e) étant délimitée d'un côté par le corps de base (7) et d'un autre côté par une joue (9, 9a, 9b), une gorge (10, 10a, 10b, 10c, 10d) étant disposée entre deux dents (8, 8a, 8b, 8c, 8d, 8e) directement voisines, qui comporte une fente de gorge en tant qu'ouverture, qui est formée par des joues immédiatement adjacentes (9a, 9b), dans lequel le dispositif de bobinage (30) présente une aiguille de bobinage (15), à l'extrémité de laquelle est disposée une buse d'avance de fil (16), et une unité de positionnement (36), sur laquelle le composant doit être disposé,
dans lequel la buse d'avance de fil (16) est disposée à l'intérieur d'une gorge (10, 10a, 10b, 10c, 10d) à côté d'une dent (8, 8a, 8b, 8c, 8d, 8e) à bobiner et l'aiguille de bobinage (15) doit être introduite à travers une fente de cette gorge (10, 10a, 10b, 10c, 10d) de la dent (8, 8a, 8b, 8c, 8d, 8e) à bobiner, dans lequel le composant de la machine électrique (2) avec l'unité de positionnement (36) et un support d'aiguille (32) en forme de barre tenant l'aiguille de bobinage (15) pour lequel un axe de support d'aiguille (34) est défini, qui croise l'aiguille de bobinage (15) à l'extrémité opposée à la buse d'avance de fil (16), doivent être déplacés l'un à l'autre par rapport à un axe de rotation en résultant (40) qui passe dans la zone d'une fente de gorge concernée à travers laquelle l'aiguille de bobinage (15) est introduite, l'aiguille de bobinage (15) doit être dirigée en direction de ladite dent (8, 8a, 8b, 8c, 8d, 8e) à bobiner et le fil (12) doit être débité par la buse d'avance de fil (16), le support d'aiguille (32) avec l'aiguille de bobinage (15) et l'axe du support d'aiguille (34) doivent être tournés de manière excentrique autour de l'axe de rotation résultant (40), l'axe de rotation résultant (40) étant parallèle aux bords des joues immédiatement adjacentes (9a, 9b), par la pointe de l'aiguille de bobinage (15) qui se trouve actuellement dans la fente de gorge.

13. Dispositif de bobinage selon la revendication 12, qui est conçu pour mettre en œuvre un procédé selon l'une quelconque des revendications 1 à 11.

14. Dispositif de bobinage selon l'une quelconque des revendications 12 ou 13, comprenant un dispositif de commande (38) qui est conçu pour commander une séquence d'un déplacement relatif entre l'aiguille de bobinage (15) et le composant, dans lequel le dispositif de commande (38) est conçu pour commander le procédé selon l'une quelconque des revendications 1 à 11.
